# EUROPEAN PATENT APPLICATION

(11) **EP 2 837 304 A2**
(43) Date of publication of application: **18.02.2015**
(21) Application number: 14168882.0
(22) Date of filing: 19.05.2014
(51) Int. Cl.: A45D 29/00

(54) **Nail sticker**

(30) Priority: 13.08.2013 KR 20130095749
(71) Applicant: JC Korea Corp., Gyeonggi-do (KR)
(72) Inventor: Kim, Dong Sung, Gyeonggi-do (KR); Kim, Hyun Surk, Gyeonggi-do (KR); Choi, Kyung Sik, Gyeonggi-do (KR); Park, Ju Young, Gyeonggi-do (KR); Choi, Jeong Rim, Gyeonggi-do (KR); Kim, Bo Mi, Seoul (KR)
(74) Representative: Jansen, Cornelis Marinus

(57) **Abstract**

Provided is a nail sticker (100), which includes an adhesive layer (120) attached to the nail or the toenail of a human body, an intermediate layer (130) provided on the adhesive layer (120), a print layer (140) provided on the intermediate layer (130), a first release layer (110) provided below the adhesive layer (120), and a second release layer (150) provided on the print layer (140).

Since the nail sticker has a modulus of 0.1 to 30 MPa, it is possible to improve durability by preventing a shrinkage phenomenon occurring in use after the nail sticker is attached to the nail or the toenail of the user.

## Description

### TECHNICAL FIELD

The following disclosure relates to a nail sticker, and in particular, to a nail sticker with improved durability by preventing shrinkage of the nail sticker.

### BACKGROUND

Generally, women decorate and preserve their hands and nails beautifully in order to spruce them up, and in this way the women give charming feeling to other persons and self-satisfaction to themselves. Like this, the nail becomes a part of fashion and a completion of the total coordination, as an inevitable element. Further, along with the development of beauty industries in these days, various shapes or letters are printed on the nail (nail art) such that an artificial nail can be used to express individuality and beauty, without being limited to a simple nail polish.

However, applying nail art to the nail is very difficult and cumbersome and demands a long time. In addition, it is difficult to apply nail art to one's own nails, such that in most cases expensive services from a specialist are required to apply the nail art. Moreover, when frequently washing hands, certain shapes or letters printed on the nail may be erased in only a few days time, such that the benefit of the nail art is short and be considered insufficient in view of the high costs of placing the nail art.

To solve these problems, an artificial nail has been developed and used as disclosed in Korean Patent Registration No. 10-0370377 (registered on January 16, 2003).

A disadvantage of artificial nails of the prior art is that they cannot be easily reused, due to the rear surface of the artificial nail becoming dirty once the artificial nail is removed after being worn. This is caused by the adhesive that needs to applied to the rear surface of the artificial nail, before it can be applied to the nail. Although a remover can be used to remove the adhesive attached to the rear surface of the artificial nail, such remover may be bad for the skin, e.g. causing skin trouble.

In addition, nail stickers are known in the prior art. However, a disadvantage of the nail stickers of the prior art is that they may decrease in size due to shrinkage of the sicker after being attached to the nail or the toenail such that it has a reduced size on the surface of the nail or the toenail (hereinafter also referred to as shrinkage phenomenon).

### SUMMARY

An object of the present invention is to providing a nail sticker with improved durability by preventing shrinkage which occurs upon use.

In one general aspect, a nail sticker is provided, which includes: an adhesive layer for attaching the sticker to a nail (in particular a hand or toenail of a human); an intermediate layer provided on top of (*i.e.* on the upper surface of) the adhesive layer; and a print layer provided on top of (*i.e.* on the upper surface of) the intermediate layer. Thus, the intermediate layer is located in between the adhesive layer and the print layer.

The nail sticker may further include a first release layer provided below (*i.e.* on the lower surface of) the adhesive layer; and a second release layer provided on top of (*i.e.* on the upper surface of) the print layer (or on top of the coating layer if present - see below). The release layers are easily removable from the layers on which they are provided. The first release layer prevents the nail sticker from adhering before use.

Regarding the order of the layers in the sticker, it is noted that, if present, the first release layer is typically the bottom layer of the nail sticker. If no first release layer is present, the adhesive layer will be the bottom layer. Furthermore, as used herein, the upper surface of a layer is considered to be the side or surface of the layer that does not face the bottom layer, while the lower surface is the surface opposite of the upper surface.

The first release layer or second release layer may be made of a material that allows any one of wet transfer, thermal transfer and dry transfer.

The structure from the adhesive layer to the print layer preferably has a mean modulus of 0.1 to 30 MPa. Such a modulus is desirable in order to prevent the above-mentioned shrinkage phenomenon.

The intermediate layer may be made of a material selected from any one of PET, OPP, PP, PS, PE, PVC, PVDC, EVA (ethylene vinyl acetate copolymer) resin, PU, TPU, polyamide resin, polyester resin, polyvinyl chloride resin, polystyrene resin, polyethylene resin, polypropylene resin and acryl resin, or their mixtures. The intermediate layer may have a modulus of 0.1 to 30 MPa in a region with an elongation rate of 10%, *i.e.* within the range from 0 to 10% extension of the intermediate layer. Such a modulus and elongation rate are desirable in order to prevent the above-mentioned shrinkage phenomenon.

The nail sticker may further include a three-dimensional material attached to the upper surface of the print layer. This three-dimensional material has an aesthetic purpose and may provide the nail with a decorative structure. It may include any one of glitter, bling, spangle, confetti, Rhinestone and pearl.

The print layer may include an ink and a medium and is formed by any one of gravure printing, flex printing and screen printing.

In another aspect of the invention, the nail sticker may further include a coating layer provided on top of the print layer. Accordingly, a nail sticker is provided, which includes: an adhesive layer for attaching the nail sticker to a nail (in particular a hand or toenail of a human); an intermediate layer provided on top of the adhesive layer; a print layer provided on top of the intermediate layer; and a coating layer provided on top of the print layer.

The nail sticker may further include a first release layer provided below the adhesive layer; and a second release layer provided on top of the coating layer.

The first release layer or second release layer may be made of a material for any one of wet transfer, thermal transfer and dry transfer.

The structure from the adhesive layer to the coating layer may have a mean modulus of 0.1 to 30 MPa to prevent the shrinkage phenomenon.

The nail sticker may further include a three-dimensional material attached to the upper surface of the coating layer. This three-dimensional material has an aesthetic purpose and may provide the nail with a decorative structure. It may include any one of glitter, bling, spangle, confetti, Rhinestone and pearl.

According to another embodiment of the present disclosure, the intermediate layer may be made of a material selected from any one of PET, OPP, PP, PS, PE, PVC, PVDC, EVA (ethylene vinyl acetate copolymer) resin, PU, TPU, polyamide resin, polyester resin, polyvinyl chloride resin, polystyrene resin, polyethylene resin, polypropylene resin and acryl resin, or their mixtures. The intermediate layer may have a modulus of 0.1 to 30 MPa in a region with an elongation rate of 10% to prevent the shrinkage phenomenon.

According to another embodiment of the present disclosure, the coating layer may be formed by applying a UV-curing paint by using any one of roll coating, comma coating, screen printing and spray coating and has a modulus of 0.1 to 30 MPa.

According to another embodiment of the present disclosure, the coating layer may contain a hardening agent for hardening any one of PET, OPP, PP, PS, PE, PVC, PVDC, EVA (ethylene vinyl acetate copolymer) resin, PU, TPU, polyamide resin, polyester resin, polyvinyl chloride resin, polystyrene resin, polyethylene resin, polypropylene resin and acryl resin, or mixtures thereof such that the coating layer has a modulus of 0.1 to 30 MPa.

Features and advantages of the present disclosure will be apparent from the following detailed description taken in conjunction with the accompanying drawings.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The nail sticker according to an embodiment of the present disclosure may be easily transferred and mounted to the nail or the toenail of a user by means of wet transfer or dry transfer.

In addition, the nail sticker according to an embodiment of the present disclosure may improve durability by preventing the shrinkage phenomenon that occurs after the nail sticker is attached to the nail or the toenail of a user. This is mainly achieved by providing the layered structure with a desirable modulus and/or tensile strength of 0.1 to 30 MPa.

In view of the above, the intermediate layer and/or coating layer may have a tensile modulus of 0.1 to 30 MPa, for example 5-25 Mpa or 10-20 MPa. Furthermore, the layered structure from the adhesive layer to the print layer, or, in case a coating layer is present, from the adhesive layer to the coating layer, may have a tensile modulus of 0.1 to 30 MPa, for example 5-25 Mpa or 10-20 MPa.

The intermediate layer and/or coating layer of the nail sticker of the invention may have a tensile strength of 0.1 to 30 MPa, for example 5-25 Mpa or 10-20 MPa. Furthermore, the layered structure from the adhesive layer to the print layer, or, in case a coating layer is present, from the adhesive layer to the coating layer, may have a tensile strength of 0.1 to 30 MPa, for example 5-25 Mpa or 10-20 MPa.

### BRIEF DESCRIPTION OF THE DRAWINGS

The above and other aspects, features and advantages of the disclosed exemplary embodiments will be more apparent from the following detailed description taken in conjunction with the accompanying drawings in which:
FIG. 1 is a sectional view showing a nail sticker according to an embodiment of the present disclosure;
FIG. 2a shows an example of the nail sticker according to an embodiment of the present disclosure, which is worn by a user;
FIG. 2b is a sectional view showing an example of the nail sticker according to an embodiment of the present disclosure, which is worn by a user;
FIG. 3 is a top view showing an example of the nail sticker according to an embodiment of the present disclosure, which is worn by a user;
FIG. 4a is a sectional view showing a nail sticker according to another embodiment of the present disclosure; and
FIG. 4b is a sectional view showing an example of the nail sticker according to another embodiment of the present disclosure, which is worn by a user.

### [Detailed Description of Main Elements]

The following elements may be present in the nail sticker (100, 200) of the invention: first release layer (110,210), adhesive layer (120,220), intermediate layer (130,232), print layer (140,240), second release layer (150,250), three-dimensional material (170,270) and coating layer (234).

### DETAILED DESCRIPTION OF EMBODIMENTS

Objects, specific advantages and new features of the present disclosure will be more apparent from the following detailed description and embodiments taken in conjunction with the accompanying drawings. In the specification, when reference numerals are endowed to components in each drawing, it should be noted that like reference numerals denote like elements even though they are depicted in several drawings. In addition, the terms "first", "second", and the like are used for distinguishing one component from another, and components are not limited to the terms. Hereinafter, in a case where detailed description of known functions or configurations in relation to the present disclosure is judged as unnecessarily making the essence of the present disclosure vague, the detailed description will be excluded.

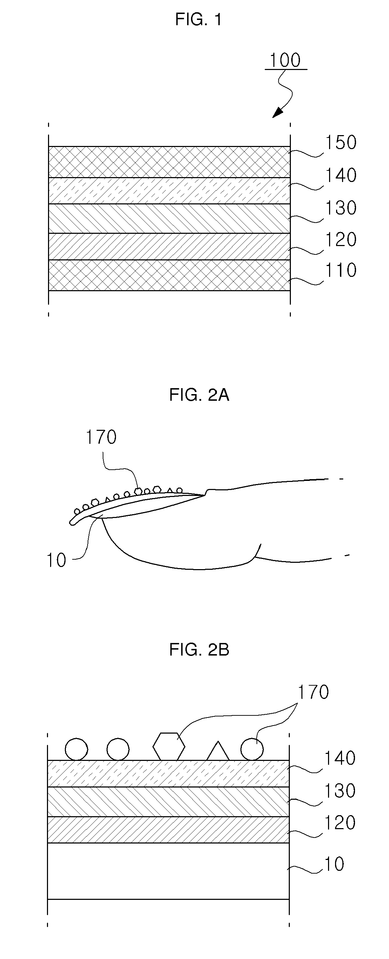

Hereinafter, preferred embodiments will be described in detail with reference to the accompanying drawings. FIG. 1 is a sectional view showing a nail sticker according to an embodiment of the present disclosure.

The nail sticker 100 according to an embodiment of the present disclosure includes a first release layer 110, an adhesive layer 120, an intermediate layer 130, a print layer 140 and a second release layer 150, from the bottom.

The first release layer 110 and the second release layer 150 are removed while the print layer 140 is transferred to the nail or the toenail. The first release layer 110 may be formed to include a release material which prevents the adhesive component of the adhesive layer 120 from being fixed, and the second release layer 150 may be provided to protect the upper surface of the print layer 140 and ensures thermal transfer, dry transfer or wet transfer of the print layer 140.

At this time, the materials of the first release layer 110 and the second release layer 150 are not specially limited and, for example, may be formed with any one of paper, PET (polyethylene terephthalate), PP, PE and nylon, which have been release-treated for wet transfer. For example, the first release layer 110 and the second release layer 150 may be formed with a sponge coated with polyethylene to ensure the releasing property.

For example, the adhesive layer 120 may be made of PSA (pressure sensitive adhesive), vinyl monomer-based polymer adhesive, or polyurethane-based adhesive. In particular, the adhesive layer 120 may have an adhesion force of 0.35 to 2.0 kgf/in, when being measured by ASTM D3330.

The intermediate layer 130 is used for improving the modulus of the nail sticker 100 and enhancing the aesthetic sense such as glossy sense by light scattering and may be made of, for example, any one of PET, OPP, PP, PS, PE, PVC, PVDC, EVA (ethylene vinyl acetate copolymer) resin, PU, TPU, polyamide resin, polyester resin, polyvinyl chloride resin, polystyrene resin, polyethylene resin, polypropylene resin and acryl resin, or their mixtures.

The intermediate layer 130 has a modulus of 0.1 to 30 MPa in a region from the initial stage to an elongation rate of 10% and is formed with at least one layer, for example multiple layers, in a thickness of 40 to 100 µm to prevent a shrinkage phenomenon of the nail sticker 100 and improve the aesthetic sense of the gel coating.

Even though the intermediate layer 130 has a modulus of 0.1 to 30 MPa, the structure from the adhesive layer 120 to the print layer 140 may be configured to have a mean modulus of 0.1 to 30 MPa, without being limited to the intermediate layer 130.

Here, if the intermediate layer 130 or the structure from the adhesive layer 120 to the print layer 140 has a modulus less than 0.1 MPa, the softness of the nail sticker 100 increases too high and is hard to handle. In this case, the nail sticker 100 may not be easily worn by the nail or the toenail.

Meanwhile, if the intermediate layer 130 or the structure from the adhesive layer 120 to the print layer 140 has a modulus greater than 30 MPa, the hardness of the nail sticker 100 increases too high. In this case, a wrinkle occurs when the nail sticker 100 is worn by the nail or the toenail, and during a cutting process, a cut surface may not be cleanly formed but naps may occur.

Therefore, the intermediate layer 130 or the structure from the adhesive layer 120 to the print layer 140 has a modulus of 0.1 to 30 MPa.

The print layer 140 contains an ink and a medium and is transferred to a human body with a design formed thereon. Here, the ink gives a color or design and may be a pigment safe to the human body, for example, a component regulated in CFR (Code of Federal Regulations) 21, and the medium plays a role of carrying and fixing the ink. At this time, the medium has a hydrophobic property and thus may give a waterproof effect so that the transferred print layer 140 is not easily erased by water.

The print layer 140 may accurately transfer various designs to the nail or the toenail, and in particular, a difficult design such as gradation may be easily applied to the nail or the toenail.

In addition, after the print layer 140 is transferred to the nail or the toenail, as shown in FIGS. 2a and 2b, an additional decoration using a three-dimensional material 170 such as glitter, bling, spangle, confetti, Rhinestone or pearl may be applied to the upper surface of the print layer 140.

The method for forming the print layer 140 is not specially limited but may use gravure printing, flex printing, screen printing or the like. At this time, the print layer 140 may be formed with a multilayered structure having various colors and designs by repeatedly performing the above printing process.

The nail sticker 100 according to an embodiment of the present disclosure configured as above may be transferred to the nail or the toenail as shown in FIG. 2a, and after the transferring process, the three-dimensional material 170 may be additionally provided to the upper surface of the print layer 140.

In detail, the process of transferring the nail sticker 100 according to an embodiment of the present disclosure will be described.

First, the first release layer 110 of the nail sticker 100 is removed, and the adhesive layer 120 is adhered to the nail or the toenail of a user.

At this time, the adhesive layer 120 may be adhered to the nail or the toenail of the user more effectively by scrubbing the second release layer 150. In addition, in the case the first release layer 110 and the second release layer 150 are formed with, for example, any one of paper, PET

(polyethylene terephthalate), PP, PE and nylon, which have been release-treated for wet transfer, the nail sticker 100 may be transferred by means of wet transfer or dry transfer.

After that, if the second release layer 150 is removed, the print layer 140 is formed on the nail or the toenail of the user in a transferred form. Here, a portion departing from the nail may be removed by using the nail of another hand of the user or any other tool from the adhesive layer 120 to the print layer 140.

Accordingly, as shown in FIG. 2a, a sticker in which the structure from the adhesive layer 120 to the print layer 140 is transferred to the nail 10 or the toenail may be provided.

The three-dimensional material 170 including glitter, bling, spangle, confetti, Rhinestone or pearl may be additionally provided to the upper surface of the print layer 140 of the sticker.

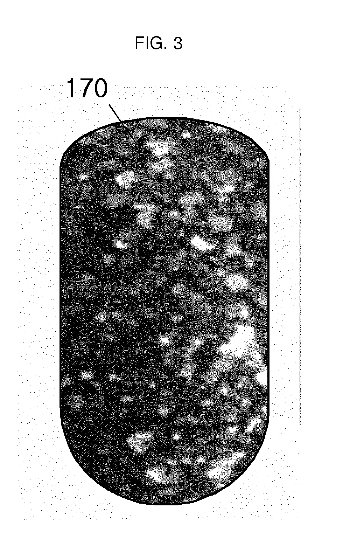

A part of the three-dimensional material 170 scatters light and therefore may give a feel of jewel which glitters on the upper surface of the print layer 140. At this time, the three-dimensional material 170 may be attached to the upper surface of the print layer 140 in various ways, for example scattering (free falling) by means of an adhesive applied to the upper surface of the print layer 140, thereby giving a desired shape or size as shown in FIG. 3.

As described above, the nail sticker 100 according to an embodiment of the present disclosure may be easily transferred and mounted to the nail 10 or the toenail of the user by means of wet transfer or dry transfer.

In addition, since the nail sticker 100 according to an embodiment of the present disclosure has a modulus of 0.1 to 30 MPa, it is possible to improve durability by preventing a shrinkage phenomenon occurring in use after the nail sticker 100 is attached to the nail 10 or the toenail of the user.

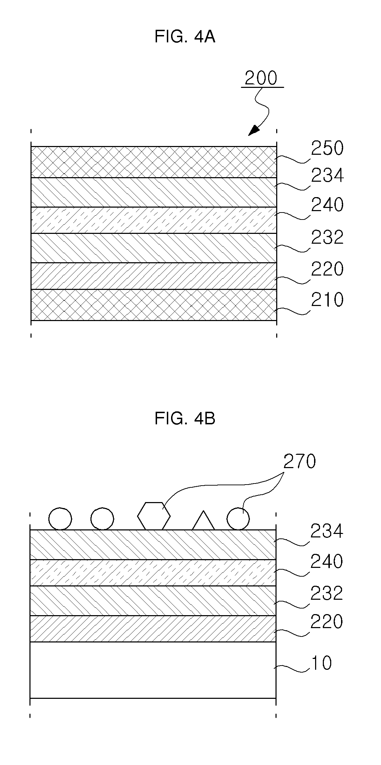

Hereinafter, a nail sticker according to another embodiment of the present disclosure will be described with reference to FIGS. 4a and 4b. FIG. 4a is a sectional view showing a nail sticker according to another embodiment of the present disclosure, and FIG. 4b is a sectional view showing an example of the nail sticker according to another embodiment of the present disclosure, which is worn by a user.

The nail sticker 200 according to another embodiment of the present disclosure includes a first release layer 210, an adhesive layer 220, an intermediate layer 232, a print layer 240, a coating layer 234 and a second release layer 250, from the bottom.

The first release layer 210 and the second release layer 250 are removed while the print layer 240 is transferred to the nail or the toenail. The first release layer 210 may be formed to include a release material which prevents the adhesive component of the adhesive layer 220 from being fixed, and the second release layer 250 may be provided to protect the upper surface of the print layer 240 and ensures thermal transfer, dry transfer or wet transfer of the print layer 240.

At this time, the materials of the first release layer 210 and the second release layer 250 are not specially limited and, for example, may be formed with any one of paper, PET (polyethylene terephthalate), PP, PE and nylon, which have been release-treated for wet transfer. At this time, the first release layer 210 and the second release layer 250 may be formed with a sponge coated with polyethylene to ensure the releasing property.

For example, the adhesive layer 220 may be made of PSA (pressure sensitive adhesive), vinyl monomer-based polymer adhesive, or polyurethane-based adhesive. In particular, the adhesive layer 220 may have an adhesion force of 0.35 to 2.0 kgf/in, when being measured by ASTM D3330.

The intermediate layer 232 is used for improving the modulus of the nail sticker 200 and enhancing the aesthetic sense such as glossy sense by light scattering and may be made of, for example, any one of PET, OPP, PP, PS, PE, PVC, PVDC, EVA (ethylene vinyl acetate copolymer) resin, PU, TPU, polyamide resin, polyester resin, polyvinyl chloride resin, polystyrene resin, polyethylene resin, polypropylene resin and acryl resin, or their mixtures.

The intermediate layer 232 has a modulus of 0.1 to 30 MPa in a region from the initial stage to an elongation rate of 10% and is formed with at least one layer, for example multiple layers, in a thickness of 40 to 100 µm to prevent a shrinkage phenomenon of the nail sticker 200 and improve the aesthetic sense of the gel coating.

Even though the intermediate layer 232 has a modulus of 0.1 to 30 MPa, the structure from the adhesive layer 220 to the coating layer 234 may be configured to have a mean modulus of 0.1 to 30 MPa, without being limited to the intermediate layer 232.

Here, if the intermediate layer 232 or the structure from the adhesive layer 220 to the coating layer 234 has a modulus less than 0.1 MPa, the softness of the nail sticker 200 increases too high and is hardly handled. In this case, the nail sticker 200 may not be easily worn by the nail or the toenail.

Meanwhile, if the intermediate layer 232 or the structure from the adhesive layer 220 to the coating layer 234 has a modulus greater than 30 MPa, the hardness of the nail sticker 200 increases too high. In this case, a wrinkle occurs when the nail sticker 200 is worn by the nail or the toenail, and during a cutting process, a cut surface may not be cleanly formed but naps may occur.

Therefore, the intermediate layer 232 or the structure from the adhesive layer 220 to the coating layer 234 has a modulus of 0.1 to 30 MPa.

The print layer 240 contains an ink and a medium and is transferred to a human body with a design formed thereon. Here, the ink gives a color or design and may be a pigment safe to the human body, for example, a component regulated in CFR 21, and the medium plays a role of carrying and fixing the ink. At this time, the medium has a hydrophobic property and thus may give a waterproof effect so that the transferred print layer 240 is not easily erased by water.

The method for forming the print layer 240 is not specially limited but may use gravure printing, flex printing, screen printing or the like. At this time, the print layer 240 may be formed with a multilayered structure having various colors and designs by repeatedly performing the above printing process.

The print layer 240 may accurately transfer various designs to the nail or the toenail, and in particular, a difficult design such as gradation may be easily applied to the nail or the toenail.

The coating layer 234 covers the print layer 240 into a flat form and may have a thickness of 10 µm to 400 µm. The coating layer 234 covers the uneven surface of the print layer 240 to give a flat surface and prevents the print layer 240 from being damaged.

In detail, the coating layer 234 may be made of, for example, UV-curing paint, PET, OPP, PP, PS, PE, PVC, PVDC, EVA (ethylene vinyl acetate copolymer) resin, PU, TPU, polyamide resin, polyester resin, polyvinyl chloride resin, polystyrene resin, polyethylene resin, polypropylene resin and acryl resin, or their mixtures by means of roll coating, comma coating, screen printing or spray coating.

The coating layer 234 improves light scattering on the upper surface of the print layer 240 to express a glossy feel of the gel nail and prevents the print layer 240 against an external impact such as scratch or crack.

In particular, when the coating layer 234 is formed with a layer containing a UV-curing paint, UV may be irradiated to the coating layer 234 and cured so that the coating layer 234 has a modulus of 0.1 to 30 MPa.

Meanwhile, when the coating layer 234 is made of any one of PET, OPP, PP, PS, PE, PVC, PVDC, EVA resin, PU, TPU, polyamide resin, polyester resin, polyvinyl chloride resin, polystyrene resin, polyethylene resin, polypropylene resin and acryl resin, or their mixtures, a hardening agent may be selectively used so that the coating layer 234 has a modulus of 0.1 to 30 MPa. Here, for the hardening agent, any kind of hardening agent having excellent compatibility with the above resins and reinforcing modulus of the resins may be suitably selected and used.

The nail sticker 200 according to another embodiment of the present disclosure configured as above may be transferred to the nail 10 or the toenail as shown in FIG. 4b, and after the transferring process, a three-dimensional material 270 may be additionally provided to the upper surface of the coating layer 234.

In detail, the process of transferring the nail sticker 200 according to another embodiment of the present disclosure will be described.

First, the first release layer 210 of the nail sticker 200 is removed, and the adhesive layer 220 is adhered to the nail 10 or the toenail of a user.

At this time, the adhesive layer 220 may be adhered to the nail or the toenail of the user more effectively by scrubbing the second release layer 250. In addition, in the case the first release layer 210 and the second release layer 250 are formed with, for example, any one of paper, PET (polyethylene terephthalate), PP, PE and nylon, which have been release-treated for wet transfer, the nail sticker 200 may be transferred by means of wet transfer or dry transfer.

After that, if the second release layer 250 is removed, the print layer 240 is formed on the nail or the toenail of the user in a transferred form. Here, a portion departing from the nail may be removed by using the nail of another hand of the user or any other tool from the adhesive layer 220 to the coating layer 234.

Accordingly, as shown in FIG. 4b, a sticker in which the structure from the adhesive layer 220 to the coating layer 234 is transferred to the nail 10 or the toenail may be provided.

The three-dimensional material 270 including glitter, bling, spangle, confetti, Rhinestone or pearl may be additionally provided to the upper surface of the coating layer 234 of the sticker.

A part of the three-dimensional material 270 scatters light and therefore may give a feel of jewel which glitters on the upper surface of the coating layer 234. At this time, the three-dimensional material 270 may be attached to the upper surface of the coating layer 234 in various ways, for example scattering (free falling) the three-dimensional material 270 by means of an adhesive applied to the upper surface of the coating layer 234 or adhering the three-dimensional material 270 to the upper surface of the coating layer 234 before the coating layer 234 is hardened.

As described above, the nail sticker 200 according to another embodiment of the present disclosure may be easily transferred and mounted to the nail 10 or the toenail of the user by means of wet transfer or dry transfer. In addition, since the coating layer 234 improves light scattering, it is possible to express a glossy feel of a gel nail and prevent external impacts such as scratch or crack.

Moreover, in the nail sticker 200 according to another embodiment of the present disclosure, since the intermediate layer 232 or the structure from the adhesive layer 220 to the coating layer 234 has a modulus of 0.1 to 30 MPa, it is possible to improve durability by preventing a shrinkage phenomenon occurring in use after the nail sticker 200 is attached to the nail or the toenail of the user.

While the present disclosure has been described in detail with respect to the embodiments, this is just for illustrating the present disclosure in detail, and the present disclosure is not limited thereto.

In addition, it will be apparent to those skilled in the art that various changes and modifications can be made without departing from the spirit and scope of the present disclosure.

## Claims

1. A nail sticker, comprising:
an adhesive layer for attaching the nail sticker to a nail of a human; and
an intermediate layer provided on the upper surface of the adhesive layer.

2. The nail sticker according to claim 1, further comprising:
a first release layer provided on the lower surface of the adhesive layer.

3. The nail sticker according to claim 1 or 2, further comprising:
a print layer provided on the upper surface of the intermediate layer.

4. The nail sticker according to any of claims 1-3, further comprising:
a second release layer provided on the upper surface of the print layer.

5. The nail sticker according to claim 3 or 4,
wherein the layered structure from the adhesive layer to the print layer has a mean tensile strength of 0.1 to 30 MPa.

6. The nail sticker according to claim 3, further comprising:
a coating layer provided on the upper surface of the print layer.

7. The nail sticker according to claim 6, further comprising:
a second release layer provided on the upper surface of the coating layer.

8. The nail sticker according to claim 6 or 7, wherein the layered structure from the adhesive layer to the coating layer has a mean tensile strength of 0.1 to 30 MPa.

9. The nail sticker according to any of claims 2-8,
wherein the first release layer or second release layer is made of a material that ensures at least one of wet transfer, thermal transfer and dry transfer.

10. The nail sticker according to any of claims 1-9,
wherein the intermediate layer is made of a material selected from group consisting of PET, OPP, PP, PS, PE, PVC, PVDC, EVA (ethylene vinyl acetate copolymer) resin, PU, TPU, polyamide resin, polyester resin, polyvinyl chloride resin, polystyrene resin, polyethylene resin, polypropylene resin and acryl resin, or mixtures thereof, and
wherein the intermediate layer has a modulus of 0.1 to 30 MPa at an elongation rate of 10%.

11. The nail sticker according to any of claims 3-10, further comprising a three-dimensional material attached to the upper surface of the print layer, or, in case the nail sticker comprises a coating layer, to the upper surface of the coating layer,
wherein the three-dimensional material includes any one of glitter, bling, spangle, confetti, Rhinestone and pearl.

12. The nail sticker according to any of claims 3-11,
wherein the print layer includes an ink and a medium and has been formed by any one of gravure printing, flex printing and screen printing.

13. The nail sticker according to any of claims 2-12,
wherein the coating layer is formed by applying a UV-curing paint by using any one of roll coating, comma coating, screen printing and spray coating and preferably has a modulus of 0.1 to 30 MPa.

14. The nail sticker according to any of claims 2-13,
wherein the coating layer contains a hardening agent for any one of PET, OPP, PP, PS, PE, PVC, PVDC, EVA (ethylene vinyl acetate copolymer) resin, PU, TPU, polyamide resin, polyester resin, polyvinyl chloride resin, polystyrene resin, polyethylene resin, polypropylene resin and acryl resin, or mixtures thereof and is formed to have a modulus of 0.1 to 30 MPa.
